# EUROPÄISCHE PATENTSCHRIFT

(11) **EP 0 760 389 B1**
(45) Veröffentlichungstag und Bekanntmachung des Hinweises auf die Patenterteilung: **24.01.2001**
(21) Anmeldenummer: 96110123.5
(22) Anmeldetag: 22.06.1996
(51) Int. Cl.: C09J 7/02, B41N 6/02

(54) **Doppelseitiges Klebeband zur Befestigung von Klischees**
Double-sided adhesive tape for securing printing plates
Adhésif double-face pour la fixation de clichés d'impression

(30) Priorität: 12.07.1995 DE 19525403
(43) Veröffentlichungstag der Anmeldung: 05.03.1997
(73) Patentinhaber: Beiersdorf Aktiengesellschaft, 20245 Hamburg (DE)
(72) Erfinder: Klose, Maren, 21218 Seevetal (DE); Thalacker, Dietlind, 22453 Hamburg (DE)

(56) Entgegenhaltungen:
- US-A- 4 097 943
- US-A- 4 871 631

## Beschreibung

Die Erfindung beschreibt die Verwendung eines doppelseitigen Klischeeklebebandes in der Druckindustrie.

In der Druckindustrie sind unterschiedliche Verfahren bekannt, um zu druckende Vorlagen auf beispielsweise Papier zu übertragen. Eine Möglichkeit besteht im sogenannten Flexodruck. Eine Ausführungsform des Flexodrucks stellt nun wiederum die Verwendung mehrschichtiger Photopolymer-Druckplatten mit flexiblem Unterbau dar, wobei diese Art des Druckens schon seit längerer Zeit zum Stand der Technik zählt. Die Druckplatten bestehen dabei aus mehreren Schichten unterschiedlichen polymeren Materials mit jeweils speziellen Aufgaben. Zum Beispiel weisen die Druckplatten "nyloflex MA" und "nyloflex ME" der Firma BASF AG drei Schichten auf, nämlich eine lichtempfindliche Reliefschicht, darunter eine Stabilisierungsfolie sowie als Basis eine elastische Trägerschicht.

Die Druckplatten müssen für den Druckvorgang auf Druckwalzen fixiert werden. Dies erfolgt zumeist durch Verkleben, insbesondere unter Verwendung eines Selbstklebebandes. Dabei muß das Klebeband die folgenden Eigenschaften aufweisen:
- Das Klebeband darf sich unter der Einwirkung von Weichmachern wie beispielsweise Dibutylphthalat, die sich in der Trägerschicht befinden, nicht verändern, insbesondere darf keine Verschlechterung der Haftfähigkeit auftreten.
- Sowohl das Klebeband als auch die Druckplatte müssen vor dem Druckvorgang ohne Beschädigung repositionierbar sein, um eventuelle Ungenauigkeiten in der Ausrichtung des Klebebandes bzw. der Druckplatte problemlos beheben zu können.
- Während des Druckvorganges muß eine sehr starke Haftung der Druckplatten auf der Druckwalze gewährleistet sein. Auch kleinste Verschiebungen der Platte führen zu völlig unzureichenden Druckergebnissen.
- Nach dem Druckvorgang muß es auf der anderen Seite aber wieder möglich sein, die Platte und das Klebeband leicht und vor allem rückstandsfrei vom Druckzylinder zu lösen, ohne dabei die Druckplatte zu beschädigen.

Die heute eingesetzten Klebebänder erfüllen die obigen Anforderungen nur mangelhaft. Auf der einen Seite sind einige Klebebänder zwar in der Lage, aufgrund einer nur schwachen Verklebung ein Repositionieren der Druckplatten zu erlauben, zeigen aber ungenügende Haftfähigkeit nach längerem Druckeinsatz, so daß die Platten während des Druckens zu wandern beginnen. Auf der anderen Seite existieren Klebebänder, die durch hohe Haftkräfte ein sicheres Verankern der Platten auf dem Zylinder gewährleisten, deren Klebeschicht aber nach dem Druck nur mit Hilfe von Lösungsmitteln von der Plattenrückseite zu entfernen ist.
Darüber hinaus ist eine große Anzahl von Klebebändern sehr empfindlich gegenüber Weichmachern, wie zum Beispiel Dibutylphthalat, so daß deren Verwendung von vornherein ausgeschlossen werden kann. Diese Klebebänder neigen während des Druckens zum Durchweichen oder gar Umspulen, was deren Haftfähigkeit annähernd vollständig reduziert.

Der Erfindung liegt nun die Aufgabe zugrunde, ein Klebeband zu schaffen, das bei seiner Verwendung die Nachteile des Stands der Technik nicht oder zumindest nicht in dem Umfang aufweist.

Gelöst wird diese Aufgabe durch die Verwendung eines Klebebands, wie es in den Patentansprüchen näher gekennzeichnet ist.

Das Klebeband weist als Träger eine polymere Folie aus Polypropylen auf. Alternativ zu Polypropylen ist auch die Verwendung von beispielsweise PVC als Trägermaterial möglich, ist aber aus heutigen Umweltschutzgesichtspunkten eher unerwünscht. Zur Beschichtung der beiden Außenflächen des Trägers werden zwei unterschiedliche Klebmassen verwendet. Auf die Seite des Klebebandes, die an der Trägerschicht der Druckplatte angesetzt wird, wird eine extrem schwach klebende Naturkautschuk-Klebmasse beschichtet. Die Klebmasse weist eine Klebkraft von 0,2 bis 2 N/cm, bevorzugt 1 N/cm, auf. Die andere Klebebeschichtung wird von einer stark klebenden Schicht gebildet, die vorzugsweise ebenfalls auf Naturkautschuk basiert. Alternativ kann aber auch eine Klebemasse, die auf herkömmlichen Acrylaten aufbaut, eingesetzt werden. Diese Beschichtung ist durch eine Klebkraft von 2 bis 6 N/cm, bevorzugt 4,5 N/cm, gekennzeichnet. Die angegebenen Klebkräfte sind nach AFERA 4001 gemessen. Die gewünschten Klebkräfte der jeweiligen Schicht sind durch Art und Menge der verwendeten Harze sowie die eingesetzten Füllstoffe variierbar.

Das Klebeband weist je nach Einsatzzweck eine Dicke von 100 µm bis 500 µm, bevorzugt 250 µm, auf.

Um die gewünschten Eigenschaften des Klebebandes, insbesondere die nötige Kohäsion sowie die geforderte Reversibilität nach Beendigung des Druckvorganges, gezielt einzustellen, ist der Zusatz von Klebharzen und Füllstoffen wie unter anderem Kohlenwasserstoffharze, Weichmacher, Alterungsschutzmittel oder Kreide zu den Klebmassen möglich.

Weiterhin kann das Klebeband ein- oder beidseitig mit einer Abdeckung aus Papier oder entsprechender Folie versehen sein, um ein längeres Lagern und eine bequeme Handhabung während des Gebrauchs zu gewährleisten.

Das erfindungsgemäße Klebeband ist aufgrund seiner besonderen Ausführung mit den auf die Druckplatte abgestimmten Klebkräften hervorragend geeignet, die Druckplatten auf den Druckzylindern zu verkleben. Einerseits ist es möglich, die Druckplatten beliebig oft vor Druckbeginn zu repositionieren, andererseits aber ist eine feste Verklebung der Platte während des Druckvorganges gewährleistet. Nach dem Drucken schließlich kann die Druckplatte ohne irgendeine Beschädigung vom Klebeband rückstandsfrei abgenommen werden, wobei das Klebeband zunächst auf dem Druckzylinder verbleibt. Ein Abschälen der Trägerschicht der Platte oder die Bildung von unerwünschten Falten in der Platte während des Entfernens tritt nicht auf. Darüber hinaus kann das Klebeband von der Druckwalze abgezogen werden, ohne daß ein Rückstand der Klebebeschichtung auf dieser verbleibt.
Weiterhin zeichnet sich das Klebeband auch durch seine Unempfindlichkeit gegenüber den in der Trägerschicht der Druckplatte verwendeten Weichmachern wie Dibutylphthalat aus. Ein Umspulen der Kleberschichten oder ein Nachlassen der Haftkräfte in den beiden Klebenähten während des Druckvorgangs ist nicht zu beobachten.

Im folgenden wird die Herstellung und Anwendung eines erfindungsgemäßen Klebebandes beispielhaft beschrieben, ohne damit die Erfindung unnötig einschränken zu wollen.

### Beispiel

Zur Herstellung des Klebebandes wird die Trägerfolie, eine unverstreckte Polypropylenfolie mit einer Dicke von 175 µm, zum Beispiel PP CN der Firma Nowofol, beidseitig mit einem Vorstrich versehen, der als Haftvermittler zwischen Folie und Klebmasse dient.
Der Vorstrich ist ein Gemisch aus 68 Gew.-% einer wäßrigen Naturkautschukdispersion, 22 Gew.-% eines Vinylacetat-Copolymers Mowilit DM 131 sowie 10 Gew.-% Polyethylenimin. Der Vorstrich wird mit einem 10er Drahtrakel in einer Stärke von circa 1 g/m² aufgetragen. Die Trocknung erfolgt bei 110 °C für 30 Sekunden.
Inline mit dem zweiten Vorstrich wird eine stark klebende Naturkautschukmasse in einer Stärke von ca. 35 g/m² mit einem Glattrakelauftragswerk aufgetragen. Die Klebemasse setzt sich dabei aus einer Mischung aus 40 Gew.-% eines Naturkautschuks, 57 Gew.-% eines Kohlenwasserstoffharzes, das mit dem Alterungsschutzmittel Colan 46 mit einem Anteil von 1 Gew.-% stabilisiert wird, und 2 Gew.-% Isocyanat Suprasec DNR als Vernetzer zusammen. Die anschließende Trocknung ist in insgesamt acht Abschnitte mit unterschiedlichen Temperaturen unterteilt. Die erste Zone weist eine Temperatur von 50 °C auf, die zweite eine von 60 °C und die anschließenden jeweils 70 °C. Die Dauer dieses Trocknungsabschnittes beträgt insgesamt 135 Sekunden. Die beschichtete Seite wird zwischenzeitlich mit einer als Prozeßfolie dienenden silikonisierten PP-Trennfolie eingedeckt. Diese wird vor der Beschichtung der zweiten Seite wieder entfernt.
Die zweite Seite des Klebebandes wird mit 50 g/m² einer schwach klebenden Naturkautschukmasse mit einem Glattrakelauftragswerk beschichtet. Die Zusammensetzung dieser Klebmasse ist in Tabelle 1 aufgeführt.

**Tabelle 1:**

| Zusammensetzung der schwach klebenden Klebmasse | |
|---|---|
| | Gew.-% |
| Naturkautschuk | 25 |
| Polyisopren | 25 |
| Cyclopentadien-Harz | 18 |
| Kohlenwasserstoffharz | 16 |
| Weichmacher Plastomoll DOA | 5 |
| Kreide | 10 |
| Alterungsschutzmittel | 1 |

Die Trocknung wird in insgesamt fünf Stufen durchgeführt. In den ersten beiden Zonen herrscht eine Temperatur 40 °C, anschließend in Zone 3 50 °C sowie in den abschließenden beiden Zonen jeweils 70 °C. Die Trocknungszeit beläuft sich auf 25 Minuten. Nach Trocknung des zweiten Massestrichs wird dieser mit einer unverstreckten, leicht genarbten sowie beidseitig mit abgestufter Trennwirkung silikonisierten PP-Trennfolie abgedeckt, die eine Dicke von 110 µm aufweist.

## Patentansprüche

1. Verwendung eines beidseitig ausgerüsteten Klebebandes zur Fixierung von mehrschichtigen, weichmacherhaltigen Photopolymer-Druckplatten mit flexiblem Unterbau auf Druckwalzen, dadurch gekennzeichnet, daß
a) der Träger des Klebebandes eine Folie aus Polypropylen oder PVC ist,
b) die erste Klebebeschichtung des Trägers aus einer Naturkautschuk-Klebemasse mit einer Klebkraft von 0,2 bis 2 N/cm besteht, auf die die Photopolymer-Druckplatte fixiert wird,
c) die zweite, der ersten gegenüberliegenden Klebebeschichtung des Trägers aus einer Naturkautschuk-Klebmasse mit einer Klebkraft von 2 bis 6 N/cm besteht, die auf die Druckwalze verklebt wird.

2. Verwendung eines Klebebandes gemäß Anspruch 1, dadurch gekennzeichnet, daß die Naturkautschuk-Klebemasse der ersten Klebebeschichtung des Trägers eine Klebkraft von 1 N/cm aufweist.

3. Verwendung eines Klebebandes gemäß Anspruch 1, dadurch gekennzeichnet, daß die Naturkautschuk-Klebmasse der zweiten, der ersten gegenüberliegenden Klebebeschichtung des Trägers eine Klebkraft von 4,5 N/cm aufweist.

4. Verwendung eines Klebebandes gemäß Anspruch 1, dadurch gekennzeichnet, daß das Klebeband eine Dicke von 100 bis 500 µm, bevorzugt 250 µm, aufweist.

5. Verwendung eines Klebebandes gemäß Anspruch 1, dadurch gekennzeichnet, daß die Klebmassen mit einem oder mehreren Additiven wie Kohlenwasserstoffharze, Kolophoniumharze, Polyesterharze, Weichmacher, Alterungsschutzmittel, Kreide, Zinkoxid und Paraffinöle abgemischt sind.

6. Verwendung eines Klebebandes gemäß Anspruch 1, dadurch gekennzeichnet, daß die zweite Klebebeschichtung des Klebebands aus einer Acrylat-Klebmasse mit einer Klebkraft von 2 bis 6 N/cm, bevorzugt 4,5 N/cm, besteht.

7. Verwendung eines Klebebandes gemäß Anspruch 1, dadurch gekennzeichnet, daß die selbstklebenden Seiten des Klebebands mit klebstoffabweisendem Material, bevorzugt Trennfolie, abgedeckt sind.

## Claims

1. Use of a double-sided adhesive tape for affixing multilayer photopolymer printing plates containing plasticizer and having a flexible substructure to printing cylinders, characterized in that
a) the backing of the adhesive tape is a film of polypropylene or PVC,
b) the first adhesive coating of the backing comprises a natural rubber adhesive composition having a bond strength of from 0.2 to 2 N/cm, to which the photopolymer printing plate is affixed,
c) the second adhesive coating of the backing, which is opposite the first, comprises a natural rubber adhesive composition having a bond strength of from 2 to 6 N/cm, which is bonded to the printing cylinder.

2. Use of an adhesive tape according to Claim 1, characterized in that the natural rubber adhesive composition of the first adhesive coating of the backing has a bond strength of 1 N/cm.

3. Use of an adhesive tape according to Claim 1, characterized in that the natural rubber adhesive composition of the second adhesive coating of the backing, which is opposite the first, has a bond strength of 4.5 N/cm.

4. Use of an adhesive tape according to Claim 1, characterized in that the adhesive tape has a thickness of from 100 to 500 µm, preferably 250 µm.

5. Use of an adhesive tape according to Claim 1, characterized in that the adhesive compositions are blended with one or more additives such as hydrocarbon resins, rosins, polyester resins, plasticizers, ageing inhibitors, chalk, zinc oxide and liquid paraffins.

6. Use of an adhesive tape according to Claim 1, characterized in that the second adhesive coating of the adhesive tape comprises an acrylate adhesive composition having a bond strength of from 2 to 6 N/cm, preferably 4.5 N/cm.

7. Use of an adhesive tape according to Claim 1, characterized in that the self-adhesive sides of the adhesive tape are lined with anti-adhesive material, preferably release film.

## Revendications

1. Utilisation d'une bande adhésive double-face pour la fixation de clichés d'impression photopolymères multicouches contenant des plastifiants avec un support flexible sur des cylindres d'imprimerie, caractérisée en ce que
a) le support de la bande adhésive est un film de polypropylène ou de PVC,
b) le premier revêtement de colle du support se compose d'une colle de caoutchouc naturel avec une force d'adhérence de 0,2 à 2 N/cm, sur laquelle le cliché d'impression photopolymère est fixé,
c) le deuxième revêtement de colle du support, opposé au premier, se compose d'une colle de caoutchouc naturel avec une force d'adhérence de 2 à 6 N/cm, qui est collée sur le cylindre d'imprimerie.

2. Utilisation d'une bande adhésive suivant la revendication 1, caractérisée en ce que la colle de caoutchouc naturel du premier revêtement de colle du support présente une force d'adhérence de 1 N/cm.

3. Utilisation d'une bande adhésive suivant la revendication 1, caractérisée en ce que la colle de caoutchouc naturel du deuxième revêtement de colle du support, opposé au premier, présente une force d'adhérence de 4,5 N/cm.

4. Utilisation d'une bande adhésive suivant la revendication 1, caractérisée en ce que la bande adhésive présente une épaisseur de 100 à 500 µm, de préférence de 250 µm.

5. Utilisation d'une bande adhésive suivant la revendication 1, caractérisée en ce que les colles sont mélangées à un ou plusieurs additifs tels que des résines hydrocarbonées, des résines de colophane, des résines de polyesters, des plastifiants, des agents de protection contre le vieillissement, de la craie, de l'oxyde de zinc et des huiles de paraffine.

6. Utilisation d'une bande adhésive suivant la revendication 1, caractérisée en ce que le deuxième revêtement de colle de la bande adhésive se compose d'une colle acrylate avec une force d'adhérence de 2 à 6 N/cm, de préférence de 4,5 N/cm.

7. Utilisation d'une bande adhésive suivant la revendication 1, caractérisée en ce que les faces auto-adhésives de la bande adhésive sont recouvertes d'une matière refusant la colle, de préférence d'un film de séparation.
